(19)

Europäisches
Patentamt
European
Patent Office
Office européen
des brevets

(11) **EP 4 456 489 A1**

(12) **EUROPEAN PATENT APPLICATION**
published in accordance with Art. 153(4) EPC

(43) Date of publication:
**30.10.2024 Bulletin 2024/44**

(21) Application number: **22909473.5**

(22) Date of filing: **20.10.2022**

(51) International Patent Classification (IPC):
**H04L 25/02** (2006.01)          **G06N 3/02** (2006.01)

(52) Cooperative Patent Classification (CPC):
**G06N 3/02; H04L 25/02**

(86) International application number:
**PCT/CN2022/126458**

(87) International publication number:
**WO 2023/116155 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2021 CN 202111593613
13.01.2022 CN 202210039452**

(71) Applicant: **Datang Mobile Communications
Equipment Co., Ltd.
Beijing 100085 (CN)**

(72) Inventors:
• **JIN, Liqiang
Beijing 100085 (CN)**
• **GAO, Qiubin
Beijing 100085 (CN)**
• **LIU, Zhengxuan
Beijing 100085 (CN)**

(74) Representative: **Studio Torta S.p.A.
Via Viotti, 9
10121 Torino (IT)**

(54) **NEURAL NETWORK OPERATION METHOD AND APPARATUS, AND STORAGE MEDIUM**

(57)    Embodiments of the present disclosure provide a neural network operation method and apparatus, and a storage medium. The method comprises: adding a random mask layer to a first neural network according to the type of a variable dimension, to obtain a second neural network, the random mask layer being used for performing random mask processing on a tensor inputted to the random mask layer; and training the second neural network by using sample data. According to the neural network operation method and apparatus and the storage medium provided in embodiments of the present disclosure, by adding the random mask layer to a neural network, only one neural network needs to be trained and deployed to adapt to different input and output dimension requirements; the method is low in training complexity, low in storage overhead, and easy in deployment and continued evolution of online training.

FIG. 2

EP 4 456 489 A1

**Description**

**CROSS-REFERENCE TO RELATED APPLICATION**

The present application claims priority to Chinese patent application No. 202111593613.7 filed on December 23, 2021, entitled "Neural Network Training and Deployment Method and Apparatus, and Storage Medium", and Chinese patent application No. 202210039452.5 filed on January 13, 2022, entitled "Neural Network Operation Method and Apparatus, and Storage Medium", which are hereby incorporated by reference in its entireties.

**FIELD**

The present application relates to the field of communication, and in particular to methods and apparatuses for operating a neural network, and a storage medium.

**BACKGROUND**

When input dimensions (collecting part of data results in different input dimensions) and/or output dimensions of a neural network are uncertain, a neural network needs to be trained for all possible input dimensions and/or output dimensions to meet different dimensions and task requirements.

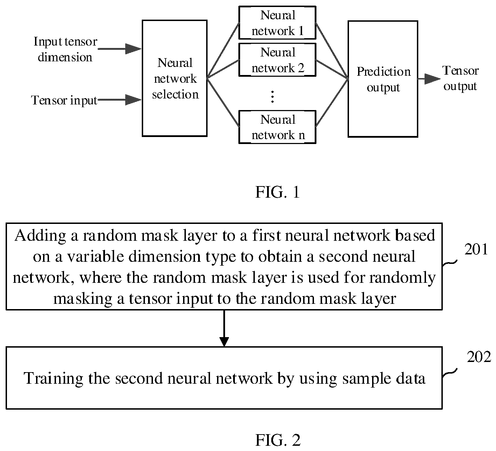

FIG. 1 is a schematic diagram of a training mode for a dimension-variable neural network in the related art. As shown in FIG. 1, a traditional possible solution is to train a neural network for each of different input dimensions respectively. As shown in FIG. 1, a system will automatically select a corresponding neural network to make a prediction based on the input dimensions. As the input dimension continues to increase (real-time data collected changes from partial to complete), a prediction value of the neural network gradually changes from "rough" to "accurate".

However, the number of neural networks in the above solution will increase as the possible situation of dimension increases. The complexity of training neural network (model) is high, and the model storage overhead is large, which is not conducive to actual deployment and continuous evolution of neural network online learning.

**SUMMARY**

Embodiments of the present application provide methods and apparatuses for operating a neural network, and a storage medium, which solve a problem in the related art that the number of neural networks increases as possible situation of dimension increases.

An embodiment of the present application provides a method for operating a neural network, including:

adding a random mask layer to a first neural network based on a variable dimension type to obtain a second neural network, where the random mask layer is used for randomly masking a tensor input to the random mask layer; and training the second neural network by using sample data.

In an embodiment, the variable dimension type includes one or more of the following types:

an input dimension being variable;
an output dimension being variable; or
an intermediate dimension being variable.

In an embodiment, adding the random mask layer to the first neural network based on the variable dimension type includes:
in case that the variable dimension type is the input dimension being variable, adding a random mask layer before an input layer of the first neural network.

In an embodiment, adding the random mask layer to the first neural network based on the variable dimension type includes:
in case that the variable dimension type is the output dimension being variable, adding a random mask layer after an output layer of the first neural network.

In an embodiment, adding the random mask layer to the first neural network based on the variable dimension type includes:
in case that the variable dimension type is the intermediate dimension being variable, adding a random mask layer in an intermediate layer of the first neural network.

In an embodiment, adding the random mask layer to the intermediate layer of the first neural network includes:

in case that only one intermediate dimension is variable, adding a random mask layer before or after an associated intermediate layer.

In an embodiment, adding the random mask layer to the intermediate layer of the first neural network includes: in case that multiple intermediate dimensions are variable, adding a random mask layer before or after each of associated intermediate layers.

In an embodiment, training the second neural network by using the sample data includes: in case that dimensions of input data of each sample data are a first threshold, training the second neural network by directly using all of the sample data, where the first threshold is a maximum value of dimensions of input data of all the sample data.

In an embodiment, training the second neural network by using the sample data includes: in case that at least one first sample data exists, performing augmentation on the first sample data, and training the second neural network by using all the first sample data and all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, performing augmentation on the first sample data includes: performing high-bit zero padding on input data of the first sample data.

In an embodiment, performing augmentation on the first sample data includes: performing low-bit zero padding on input data of the first sample data.

In an embodiment, training the second neural network by using the sample data includes: in case that at least one first sample data exists, eliminating the first sample data, and training the second neural network by using all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, randomly masking the tensor input to the random mask layer includes:

> determining the tensor input to the random mask layer and a random mask tensor; and
> randomly masking the tensor input to the random mask layer by using the random mask tensor.

In an embodiment, randomly masking the tensor input to the random mask layer is expressed by:

$$\widehat{X} = X \otimes M,$$

where $\widehat{X}$ represents a tensor output from the random mask layer, $X$ represents the tensor input to the random mask layer, $\otimes$ represents performing bitwise point multiplication operation on tensors, and $M$ represents the random mask tensor.

In an embodiment, the random mask tensor is a hard-masking tensor.

In an embodiment, the random mask tensor is a soft-masking tensor.

In an embodiment, the random mask tensor is merged by a hard-masking tensor and a soft-masking tensor.

In an embodiment, after training the second neural network by using the sample data, the method further includes: replacing a random mask layer in a trained second neural network with a tensor transformation layer, where the tensor transformation layer is used to perform dimension transformation on a tensor input to the tensor transformation layer.

In an embodiment, replacing the random mask layer in the trained second neural network with the tensor transformation layer includes: in case that a random mask layer exists before an input layer of the trained second neural network, replacing the random mask layer before the input layer of the trained second neural network with a tensor padding layer, where the tensor padding layer is used to increase a dimension of a tensor input to the tensor padding layer to a first threshold, and the first threshold is a maximum value of dimensions of input data of all the sample data.

In an embodiment, replacing the random mask layer in the trained second neural network with the tensor transformation layer includes: in case that a random mask layer exists after an output layer of the trained second neural network, replacing the random mask layer after the output layer of the trained second neural network with a tensor cropping layer, where the cropping layer is used to reduce a dimension of a tensor input to the tensor cropping layer to a first target value.

In an embodiment, replacing the random mask layer in the trained second neural network with the tensor transformation layer includes: in case that a random mask layer exists in an intermediate layer of the trained second neural network, replacing the random mask layer in the intermediate layer of the trained second neural network with a cascaded tensor cropping and tensor padding layer, where the cascaded tensor cropping and tensor padding layer is used to first reduce a dimension of a tensor input to the cascaded tensor cropping and tensor padding layer to a second target value, and then increase the dimension of the tensor to an original dimension.

An embodiment of the present application further provides an electronic device, including a memory, a transceiver and a processor,

where the memory is used to store computer programs, the transceiver is used to transmit and receive data under control of the processor, and the processor is used to read the computer program in the memory and perform the following operations.

In an embodiment, the variable dimension type includes one or more of the following types:

an input dimension being variable;
an output dimension being variable; or
an intermediate dimension being variable.

In an embodiment, adding the random mask layer to the first neural network based on the variable dimension type includes:

in case that the variable dimension type is the input dimension being variable, adding a random mask layer before an input layer of the first neural network.

In an embodiment, adding the random mask layer to the first neural network based on the variable dimension type includes:

in case that the variable dimension type is the output dimension being variable, adding a random mask layer after an output layer of the first neural network.

In an embodiment, adding the random mask layer to the first neural network based on the variable dimension type includes:

in case that the variable dimension type is the intermediate dimension being variable, adding a random mask layer in an intermediate layer of the first neural network.

In an embodiment, adding the random mask layer to the intermediate layer of the first neural network includes:
in case that only one intermediate dimension is variable, adding a random mask layer before or after an associated intermediate layer.

In an embodiment, adding the random mask layer to the intermediate layer of the first neural network includes:
in case that multiple intermediate dimensions are variable, adding a random mask layer before or after each of associated intermediate layers.

In an embodiment, training the second neural network by using the sample data includes:
in case that dimensions of input data of each sample data are a first threshold, training the second neural network by directly using all of the sample data, where the first threshold is a maximum value of dimensions of input data of all the sample data.

In an embodiment, training the second neural network by using the sample data includes:
in case that at least one first sample data exists, performing augmentation on the first sample data, and training the second neural network by using all the first sample data and all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, performing augmentation on the first sample data includes:
performing high-bit zero padding on input data of the first sample data.

In an embodiment, performing augmentation on the first sample data includes:
performing low-bit zero padding on input data of the first sample data.

In an embodiment, training the second neural network by using the sample data includes:
in case that at least one first sample data exists, eliminating the first sample data, and training the second neural network by using all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, randomly masking the tensor input to the random mask layer includes:

determining the tensor input to the random mask layer and a random mask tensor; and
randomly masking the tensor input to the random mask layer by using the random mask tensor.

In an embodiment, randomly masking the tensor input to the random mask layer is expressed by:

$$\widehat{X} = X \otimes M,$$

where $\widehat{X}$ represents a tensor output from the random mask layer, X represents the tensor input to the random mask layer, $\otimes$ represents performing bitwise point multiplication operation on tensors, and M represents the random mask tensor.

In an embodiment, the random mask tensor is a hard-masking tensor.

In an embodiment, the random mask tensor is a soft-masking tensor.

In an embodiment, the random mask tensor is merged by a hard-masking tensor and a soft-masking tensor.

In an embodiment, after training the second neural network by using the sample data, the method further includes:

replacing a random mask layer in the trained second neural network with a tensor transformation layer, where the tensor transformation layer is used to perform dimension transformation on a tensor input to the tensor transformation layer.

In an embodiment, replacing the random mask layer in the trained second neural network with the tensor transformation layer includes:

in case that a random mask layer exists before an input layer of the trained second neural network, replacing the random mask layer before the input layer of the trained second neural network with a tensor padding layer, where the tensor padding layer is used to increase a dimension of a tensor input to the tensor padding layer to a first threshold, and the first threshold is a maximum value of dimensions of input data of all the sample data.

In an embodiment, replacing the random mask layer in the trained second neural network with the tensor transformation layer includes:

in case that a random mask layer exists after an output layer of the trained second neural network, replacing the random mask layer after the output layer of the trained second neural network with a tensor cropping layer, where the cropping layer is used to reduce a dimension of a tensor input to the tensor cropping layer to a first target value.

In an embodiment, replacing the random mask layer in the trained second neural network with the tensor transformation layer includes:

in case that a random mask layer exists in an intermediate layer of the trained second neural network, replacing the random mask layer in the intermediate layer of the trained second neural network with a cascaded tensor cropping and tensor padding layer, where the cascaded tensor cropping and tensor padding layer is used to first reduce a dimension of a tensor input to the cascaded tensor cropping and tensor padding layer to a second target value, and then increase the dimension of the tensor to an original dimension.

An embodiment of the present application further provides a method for operating a neural network, including:

obtaining prediction data; and

inputting the prediction data to a deployed target neural network to obtain a prediction result output from the target neural network, where the target neural network includes at least one tensor transformation layer, and the tensor transformation layer is used to perform dimension transformation on a tensor input to the tensor transformation layer.

In an embodiment, the target neural network is the second neural network of any one of the above-mentioned second neural networks.

An embodiment of the present application further provides an electronic device, including a memory, a transceiver and a processor,

where the memory is used to store computer programs, the transceiver is used to transmit and receive data under control of the processor, and the processor is used to read the computer program in the memory and perform the following operations of:

obtaining prediction data; and

inputting the prediction data to a deployed target neural network to obtain a prediction result output from the target neural network, where the target neural network includes at least one tensor transformation layer, and the tensor transformation layer is used to perform dimension transformation on a tensor input to the tensor transformation layer.

In an embodiment, the target neural network is the second neural network of any one of the above-mentioned second neural networks.

An embodiment of the present application further provides an apparatus for operating a neural network, including:

an adding module, used for adding a random mask layer to a first neural network based on a variable dimension type to obtain a second neural network, where the random mask layer is used for randomly masking a tensor input to the random mask layer; and
a training module, used for training the second neural network by using sample data.

In an embodiment, the variable dimension type includes one or more of the following types:

an input dimension being variable;
an output dimension being variable; or
an intermediate dimension being variable.

In an embodiment, the adding module is used for:
in case that the variable dimension type is the input dimension being variable, adding a random mask layer before an input layer of the first neural network.

In an embodiment, the adding module is used for:
in case that the variable dimension type is the output dimension being variable, adding a random mask layer after an output layer of the first neural network.

In an embodiment, the adding module is used for:
in case that the variable dimension type is the intermediate dimension being variable, adding a random mask layer in an intermediate layer of the first neural network.

In an embodiment, the adding module is used for:
in case that only one intermediate dimension is variable, adding a random mask layer before or after an associated intermediate layer.

In an embodiment, the adding module is used for:
in case that multiple intermediate dimensions are variable, adding a random mask layer before or after each of associated intermediate layers.

In an embodiment, the training module is specifically used for:
in case that dimensions of input data of each sample data are a first threshold, training the second neural network by directly using all of the sample data, where the first threshold is a maximum value of dimensions of input data of all the sample data.

In an embodiment, the training module is specifically used for:
in case that at least one first sample data exists, performing augmentation on the first sample data, and training the second neural network by using all the first sample data and all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, the training module is used for:
performing high-bit zero padding on input data of the first sample data.

In an embodiment, the training module is specifically used for:
performing low-bit zero padding on input data of the first sample data.

In an embodiment, the training module is specifically used for:
in case that at least one first sample data exists, eliminating the first sample data, and training the second neural network by using all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, the training module is specifically used for:

determining the tensor input to the random mask layer and a random mask tensor; and
randomly masking the tensor input to the random mask layer by using the random mask tensor.

In an embodiment, randomly masking the tensor input to the random mask layer is expressed by:

$$\hat{X} = X \otimes M,$$

where $\hat{X}$ represents a tensor output from the random mask layer, X represents the tensor input to the random mask layer, $\otimes$ represents performing bitwise point multiplication operation on tensors, and M represents the random mask tensor.

In an embodiment, the random mask tensor is a hard-masking tensor.

In an embodiment, the random mask tensor is a soft-masking tensor.

In an embodiment, the random mask tensor is merged by a hard-masking tensor and a soft-masking tensor.

In an embodiment, the apparatus further includes a deploying module,

where the deploying module is used for replacing a random mask layer in the trained second neural network with a tensor transformation layer, where the tensor transformation layer is used to perform dimension transformation on a tensor input to the tensor transformation layer.

In an embodiment, the deploying module is specifically used for:

in case that a random mask layer exists before an input layer of the trained second neural network, replacing the random mask layer before the input layer of the trained second neural network with a tensor padding layer, where the tensor padding layer is used to increase a dimension of a tensor input to the tensor padding layer to a first threshold, and the first threshold is a maximum value of dimensions of input data of all the sample data.

In an embodiment, the deploying module is specifically used for:

in case that a random mask layer exists after an output layer of the trained second neural network, replacing the random mask layer after the output layer of the trained second neural network with a tensor cropping layer, where the cropping layer is used to reduce a dimension of a tensor input to the tensor cropping layer to a first target value.

In an embodiment, the deploying module is specifically used for:

in case that a random mask layer exists in an intermediate layer of the trained second neural network, replacing the random mask layer in the intermediate layer of the trained second neural network with a cascaded tensor cropping and tensor padding layer, where the cascaded tensor cropping and tensor padding layer is used to first reduce a dimension of a tensor input to the cascaded tensor cropping and tensor padding layer to a second target value, and then increase the dimension of the tensor to an original dimension.

An embodiment of the present application further provides an apparatus for operating a neural network, including:

an obtaining module, used for obtaining prediction data; and

a processing module, used for inputting the prediction data to a deployed target neural network to obtain a prediction result output from the target neural network, where the target neural network includes at least one tensor transformation layer, and the tensor transformation layer is used to perform dimension transformation on a tensor input to the tensor transformation layer.

In an embodiment, the target neural network is the second neural network of any one of the above-mentioned second neural networks.

An embodiment of the present application further provides a processor-readable storage medium having a computer program stored thereon, where the computer program is used to cause a processor to perform steps of the methods for operating the neural network.

An embodiment of the present application further provides a computer-readable storage medium having a computer program stored thereon, where the computer program is used to cause a computer to perform steps of the methods for operating the neural network.

An embodiment of the present application further provides a communication device-readable storage medium having a computer program stored thereon, where the computer program is used to cause a communication device to perform steps of the methods for operating the neural network.

An embodiment of the present application further provides a chip-product-readable storage medium having a computer program stored thereon, where the computer program is used to cause a chip product to perform steps of the methods for operating the neural network.

In the methods and apparatuses for operating the neural network, and the storage mediums provided by the embodiments of the present application, by adding a random mask layer to the neural network, only one neural network is required to be trained and deployed to adapt to requirements for different input and output dimensions, which has low training complexity and low storage overhead, and is conducive to deployment and continuous evolution of neural network online training.

## BRIEF DESCRIPTION OF THE DRAWINGS

In order to clearly illustrate the solutions disclosed in the embodiments of the present application, the drawings used in the descriptions of the embodiments are briefly described below. The drawings in the following description are only some embodiments of the present application, and other drawings may be obtained based on these drawings without creative work for those skilled in the art.

FIG. 1 is a schematic diagram of a training mode for a dimension-variable neural network in the related art;
FIG. 2 is a schematic flowchart of a method for operating a neural network according to an embodiment of the present application;
FIG. 3 is a block diagram of a training for a dimension-variable neural network according to an embodiment of the present application;
FIG. 4 is a schematic diagram of a hard-masking tensor according to an embodiment of the present application;
FIG. 5 is a block diagram of a deployment for a dimension-variable neural network according to an embodiment of the present application;
FIG. 6 is a schematic diagram of a tensor padding module and a tensor cropping module according to an embodiment of the present application;
FIG. 7 is a schematic diagram of an autoencoder neural network according to an embodiment of the present application;
FIG. 8 is a schematic diagram of single-symbol and dual-symbol demodulation reference signal (DMRS) according to an embodiment of the present application;
FIG. 9 is a block diagram of an autoencoder-based channel state information (CSI) compression feedback according to an embodiment of the present application;
FIG. 10 is a schematic structural diagram of an electronic device according to an embodiment of the present application; and
FIG. 11 is a schematic structural diagram of an apparatus for operating a neural network according to an embodiment of the present application.

## DETAILED DESCRIPTION

An artificial neural network is a simplified model that abstracts a neural network of a human brain from the perspective of information processing. In academia and industry, artificial neural network is simply called neural network, which is a computing model consisting of a large number of computing nodes connected to each other in a specific mode. This model is usually an expression or an approximate expression of a certain algorithm or a certain function mapping. In the training of the neural network, an engineer first needs to determine a structure and a hyperparameter of the neural network, then feeds data into the model and give gradient backpropagation to update a weight of the trained neural network. The trained neural network is an approximation of a mapping relationship between input data and labels. During deployment, new data is fed into the neural network to obtain a prediction value. Common neural networks include feedforward (or fully connected) neural networks, convolutional neural networks, recurrent neural networks, etc. With the improvement of computer performance and large-scale deployment of graphics processing units (GPUs), the application of neural networks in fields of computer vision, natural language processing, biomedicine, and automatic control has become very common.

The training and deployment of neural networks are usually task-oriented, so input and output dimensions of a neural network are generally determined. A neural network trained for task A usually cannot be used for task B, or have poor performance when used for task B. When the input and output dimensions of the neural network are uncertain, a neural network needs to be trained for all possible input and output dimensions to cope with different dimensions and task requirements. For example, a system responds based on a prediction value of a deployed neural network, and input of the neural network is data collected in real time. When a real-time requirement of the system is high, the system is expected to have the neural network give some "rough" prediction results based on part of the collected data, so that the system can respond in an optimal direction in advance, thus saving the total time of responding in the optimal direction. A traditional possible solution is to train a neural network for each of different input dimensions respectively (collecting part of data results in different input dimensions), as shown in FIG. 1. A system will automatically select a corresponding neural network to make a prediction based on the input dimension. As the input dimension continues to increase (real-time data collected changes from partial to complete), a prediction value of the neural network gradually changes from "rough" to "accurate".

When the input dimension and the output dimension of the neural network are uncertain, a traditional technology requires deploying multiple neural networks to cope with requirements for different input and output dimensions. The number of neural networks in the above solution will increase as the possible situation of dimension increases. The complexity of training the model is high, and the model storage overhead is large, which is not conducive to actual deployment and continuous evolution of neural network online learning.

Based on the above problems, embodiments of the present application provide methods and apparatuses for operating a neural network, and a storage medium. This method only needs to train and deploy a neural network to adapt to requirements for different input and output dimension by adding a random mask layer to the neural network. It has low training complexity, low storage overhead, easy deployment and continuous evolution of online training.

In order to illustrate the objectives, solutions and advantages of the present application clearly, the solutions in the embodiments of the present application are clearly and completely described in the following in conjunction with the accompanying drawings in the present application. These embodiments are a part of the embodiments of the present application, and not all of the embodiments. All other embodiments obtained by a person of ordinary skill in the art based on the embodiments of the present application without creative work are within the scope of the present application.

FIG. 2 is a schematic flowchart of a method for operating a neural network according to an embodiment of the present application. As shown in FIG. 2, an embodiment of the present application provides a method for operating a neural network, which may be executed by an electronic device, such as a terminal, a base station, a core network element, etc. The method includes the following steps.

Step 201: adding a random mask layer to a first neural network based on a variable dimension type to obtain a second neural network, where the random mask layer is used for randomly masking a tensor input to the random mask layer.

Step 202: training the second neural network by using sample data.

In an embodiment, the variable dimension type includes one or more of the following types:

an input dimension being variable;
an output dimension being variable; or
an intermediate dimension being variable.

In an embodiment, adding the random mask layer to the first neural network based on the variable dimension type includes:
in case that the variable dimension type is the input dimension being variable, adding a random mask layer before an input layer of the first neural network.

In an embodiment, adding the random mask layer to the first neural network based on the variable dimension type includes:
in case that the variable dimension type is the output dimension being variable, adding a random mask layer after an output layer of the first neural network.

In an embodiment, adding the random mask layer to the first neural network based on the variable dimension type includes:
in case that the variable dimension type is the intermediate dimension being variable, adding a random mask layer in an intermediate layer of the first neural network.

In an embodiment, adding the random mask layer to the intermediate layer of the first neural network includes:
in case that only one intermediate dimension is variable, adding a random mask layer before or after an associated intermediate layer.

In an embodiment, adding the random mask layer to the intermediate layer of the first neural network includes:
in case that multiple intermediate dimensions are variable, adding a random mask layer before or after each of associated intermediate layers.

In an embodiment, training the second neural network by using the sample data includes:
in case that dimensions of input data of each sample data are a first threshold, training the second neural network by directly using all of the sample data, where the first threshold is a maximum value of dimensions of input data of all the sample data.

In an embodiment, training the second neural network by using the sample data includes:
in case that at least one first sample data exists, performing augmentation on the first sample data, and training the second neural network by using all the first sample data and all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, performing augmentation on the first sample data includes:
performing high-bit zero padding on input data of the first sample data.

In an embodiment, performing augmentation on the first sample data includes:
performing low-bit zero padding on input data of the first sample data.

In an embodiment, training the second neural network by using the sample data includes:
in case that at least one first sample data exists, eliminating the first sample data, and training the second neural network by using all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, randomly masking the tensor input to the random mask layer includes:

determining the tensor input to the random mask layer and a random mask tensor; and
randomly masking the tensor input to the random mask layer by using the random mask tensor.

In an embodiment, randomly masking the tensor input to the random mask layer is expressed by:

$$\hat{X} = X \otimes M,$$

where $\hat{X}$ represents a tensor output from the random mask layer, X represents the tensor input to the random mask layer, $\otimes$ represents performing bitwise point multiplication operation on tensors, and M represents the random mask tensor.

In an embodiment, the random mask tensor is a hard-masking tensor.

In an embodiment, the random mask tensor is a soft-masking tensor.

In an embodiment, the random mask tensor is merged by a hard-masking tensor and a soft-masking tensor.

In an embodiment, after training the second neural network by using the sample data, the method further includes:

replacing a random mask layer in the trained second neural network with a tensor transformation layer, where the tensor transformation layer is used to perform dimension transformation on a tensor input to the tensor transformation layer.

In an embodiment, replacing the random mask layer in the trained second neural network with the tensor transformation layer includes:

in case that a random mask layer exists before an input layer of the trained second neural network, replacing the random mask layer before the input layer of the trained second neural network with a tensor padding layer, where the tensor padding layer is used to increase a dimension of a tensor input to the tensor padding layer to a first threshold, and the first threshold is a maximum value of dimensions of input data of all the sample data.

In an embodiment, replacing the random mask layer in the trained second neural network with the tensor transformation layer includes:

in case that a random mask layer exists after an output layer of the trained second neural network, replacing the random mask layer after the output layer of the trained second neural network with a tensor cropping layer, where the cropping layer is used to reduce a dimension of a tensor input to the tensor cropping layer to a first target value.

In an embodiment, replacing the random mask layer in the trained second neural network with the tensor transformation layer includes:

in case that a random mask layer exists in an intermediate layer of the trained second neural network, replacing the random mask layer in the intermediate layer of the trained second neural network with a cascaded tensor cropping and tensor padding layer, where the cascaded tensor cropping and tensor padding layer is used to first reduce a dimension of a tensor input to the cascaded tensor cropping and tensor padding layer to a second target value, and then increase the dimension of the tensor to an original dimension.

In the embodiment of the present application, input tensor dimensions and output tensor dimensions of the input layer, the output layer, and some intermediate layers of the neural network are determined based on a maximum dimension of training data, a maximum dimension of a label, and a task requirement.

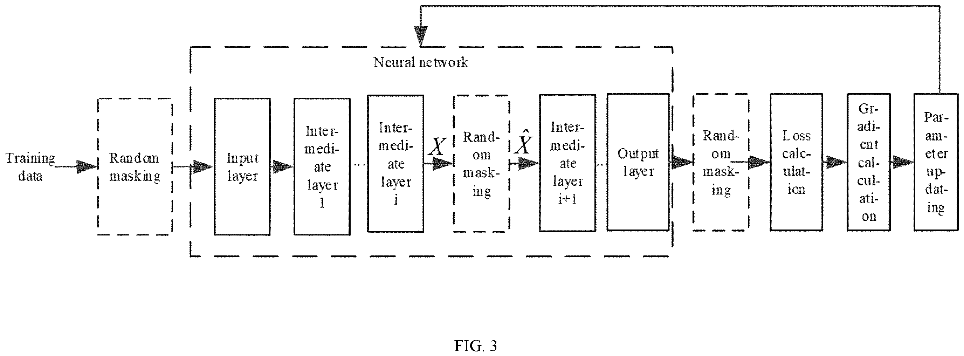

FIG. 3 is a block diagram of a training for a dimension-variable neural network according to an embodiment of the present application. As shown in FIG. 3, during training, a random mask module (also called a random mask layer) is added to a layer corresponding to a tensor that requires variable dimensions to train the network. Specifically, it may include the following steps.

1. If an input dimension of the neural network is variable, a random mask module is added on a left of an input layer.

2. If an output dimension of the neural network is variable, a random mask module is added on a right of the output layer.

3. If an output dimension of an i-th intermediate layer and an input dimension of an (i+1)-th intermediate layer in the neural network are variable, a random mask module is added between the intermediate layer i and the intermediate layer (i+1).

4. If an input layer, an output layer and an intermediate layer of the neural network have multiple dimension-variable requirements at the same time, multiple random mask modules are added at the corresponding positions.

5. On the left of the input layer, it may only use maximum dimension data as training data (if there is non-maximum dimension data, these data can be eliminated first), or the data augmentation may be performed before training by using high-bit zero padding or low-bit zero padding, to increase low-dimensional input data to maximum dimension data.

By adding a random mask module, the neural network updates the trained neural network by calculating a gradient value of a loss function with respect to a weight of the neural network. The random mask operation (random mask processing) acts on a tensor X, and is expressed as

$$\hat{X} = X \otimes M.$$

$\hat{X}$, X and M are $R_X$-order tensors of $L_{\hat{X}} = L_X = L_M = L_X^1 \times L_X^2 \times ... \times L_X^i \times ... \times L_X^{R_X}$ dimensions (for example, X is an image having a length of 64, and a width of 64, then $L_X = 64 \times 64 \times 3$, where 3 represents three primary color channels of red, green and blue), $L_X^i$ is an i-th order dimension of an input tensor, operation $\otimes$ represents bitwise dot multiplication of tensors, M is a (random) mask tensor and $\hat{X}$ is a mask result. The mask tensor M is a random tensor, which is independently and identically distributed for each training sample and each training epoch. $R_X$ -order mask tensor M has dimensions of $L_M^1 \times L_M^2 \times ... \times L_M^i \times ... \times L_M^{R_M}$, which can be but is not limited to the following.

1. Hard-Masking

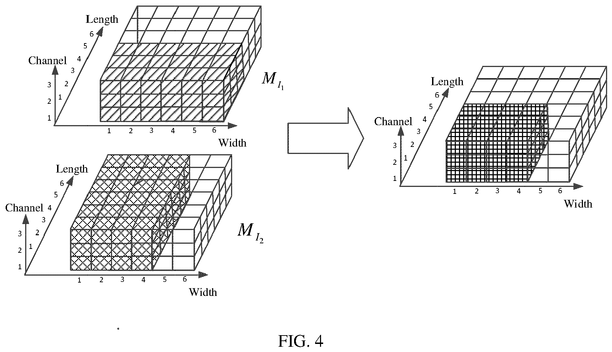

$M = M_{I_1} \otimes M_{I_2} \otimes M_{I_3} \otimes ...$, where $1 = \{I_1, I_2, I_3, ...\} \subseteq \{1, 2, ... , R_M\}$ represents an order required for masking. For example, for an image having a dimension of $6 \times 6 \times 3$, three dimensions of the three primary color channels of red, green and blue are not masked, and I = {1,2}, as shown in FIG. 4. Third-order tensor dimension is $6 \times 6 \times 3$, for $M_{I_1}$ and $M_{I_2}$, t = 3 and t = 4. Values of elements of tensor $M_{I_i}$ are taken as follows based on indexes of $(j_1, j_2, ... , j_{R_M})$:

$$M_{I_i}(j_1, j_2, ..., j_{R_M}) = \begin{cases} 0 & j_{I_i} > t \\ 1 & j_{I_i} \leq t \end{cases},$$

where $t = \left\{0, 1, ..., L_M^{I_i}\right\}$ obeys a given probability distribution (for example, uniform distribution), and for each $I_i$, t is independently and identically distributed.

2. Soft-Masking

For example, exponentially decaying soft-masking $M = M_{I_1} \otimes M_{I_2} \otimes M_{I_3} \otimes ...$ . Values of elements of tensor $M_{I_i}$ are taken as follows based on indexes of indexes of $(j_1, j_2, ... , j_{R_M})$:

$$M_{I_i}(j_1, j_2, ..., j_{R_M}) = e^{\frac{-\lambda\left(j_{I_i}-1\right)}{L_M^{I_i}}},$$

where real number $\lambda \in [0, \lambda_{max}]$ obeys a certain distribution (for example, uniform distribution), and for each $I_i$, $\lambda$ is also independently and identically distributed.

3. In M, it is possible to use part of the hard-masking and part of the soft-masking, that is, merge the hard-masking and the soft-masking.

When the above mask tensor is applied to a certain tensor, it will not change the dimension of the tensor itself, and is equivalent to weighting the tensor, $(j_1, j_2, ... , j_{R_M})$, a greater weight is assigned to tensor values at positions with smaller indexes are .

For example, for a first-order tensor (vector), the hard-masking $M = M_{I_1} = [1,1, ...,1,0,0, ...,0]$ is a vector having first t bits being 1 and last $L_M^1 - t$ bits being 0. $\hat{X} = X \otimes M$ is equivalent to setting the last $L_M^1 - t$ bits of X to 0, and the dimension of the tensor remains unchanged.

During training, an optimizer calculates gradient backpropagation based on loss and updates a weight parameter of the neural network.

In addition, the following content may also be included in FIG. 3.

1. The neural network may be, but not limited to, a convolutional neural network, a feedforward (or fully connected) neural network, a recursive neural networks and combinations thereof.

2. The loss function may be, but not limited to mean square error, 1 norm, categorical cross entropy, and cosine similarity.

3. The random mask module avoids a problem of gradient disappearance or non-differentiability by customizing the gradient and treating the mask tensor as a constant tensor.

4. An input side random mask, an output side random mask, and an intermediate layer random mask may exist at the same time, or only a few of them may exist. The number of specific used random masks may be determined based on a specific task.

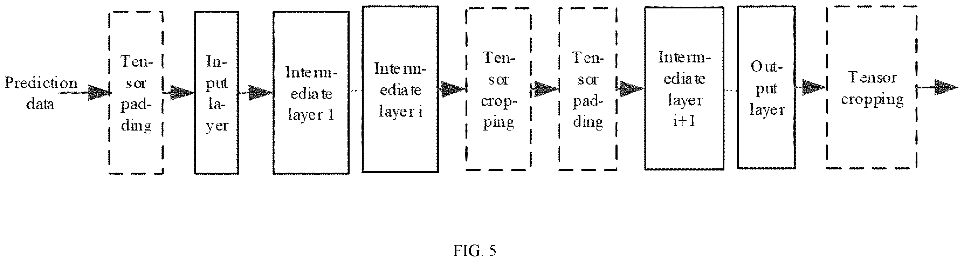

FIG. 5 is a block diagram of a deployment for a dimension-variable neural network according to an embodiment of the present application. As shown in FIG. 5, during deployment, the dimension-variable neural network may be constructed by removing a random mask module from a trained neural network, and adding a tensor padding module (also known as a tensor padding layer) and a tensor cropping module (also known as a tensor cropping layer). Specifically, it may include the following steps.

1. A random mask module on a left of an input layer is replaced with a tensor padding module, which pads an input tensor to a maximum input dimension by performing low-bit or high-bit zero padding.

2. A random mask module on a right of an output layer is replaced with a tensor cropping module, which outputs a tensor by performing high-bit or low-bit cropping.

3. A random mask module between an intermediate layer i and an intermediate layer (i+1) is replaced with a cascaded tensor cropping module and tensor padding module.

During the entire procedure, only one neural network is trained and deployed to adapt to requirements for different input and output dimensions, thereby avoiding problems of training multiple neural networks and storage.

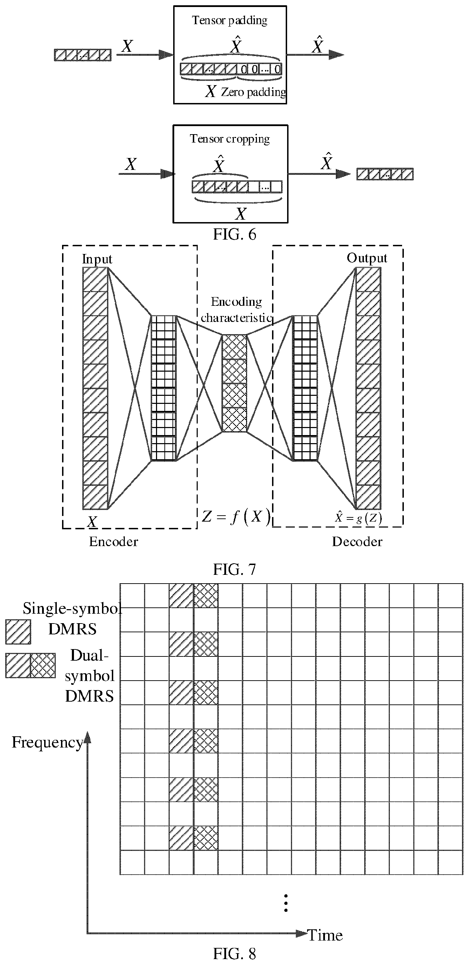

The dimension-variable neural network is constructed based on the above-trained neural network by removing the random mask module and replacing the random mask module with the tensor padding module the and tensor cropping module, as shown in FIG. 5. The tensor padding module and tensor cropping module are shown in FIG. 6. If an i-th order length of the input tensor X is less than $L_X^i$, the tensor is padded by performing high-bit or low-bit zero padding, to make an i-th order dimension being equal to $L_X^i$.

1. If high-bit zero padding is adopted, the training process is as shown in FIG. 3.

2. If low-bit zero padding is adopted, for a random mask tensor M corresponding to the tensor X, an i-th index of requires an additional reverse rearrangement operation.

When the i-th order dimension of an output tensor X is larger than a required dimension, the output tensor X crops the tensor by trimming low-bits or high-bits, to obtain a tensor $\hat{X}$ satisfied a requirement for output dimension.

1. If low-bit trimming is adopted, the training process as shown in FIG. 3.

2. If high-order trimming is adopted, for a random mask tensor M corresponding to the tensor X during training, an i-th index of requires an additional reverse rearrangement operation.

It can be seen that the system only needs one neural network deployment, the output tensor is cropped as needed, zero padding is performed on the input tensor, and requirements of different input and output dimensions are satisfied.

The above mode will be further described below with several specific embodiments.

Embodiment 1:

As shown in FIG. 7, the neural network is an autoencoder used for image compression, in which an encoder module is used to compress images and a decoder module is used to restore images. Both an input of the encoder and an output of the decoder are images having a dimension of $L_X = L_{\hat{X}} = 128 \times 128 \times 3$. The output of the encoder (which is also the input of the decoder) has variable dimension requirements, and a maximum dimension is $L_Z = 8192$. During training, a random hard-masking module is added between the encoder and the decoder. A parameter $t \in [0, 8192]$ of the mask tensor obeys uniform distribution, and Adam optimizer is used to train the autoencoder neural network. When training the neural network is completed, the encoder is deployed at a sender and the decoder is deployed at a receiver. The sender intercepts tensor output from the encoder based on a compression rate requirement. The receiver determines the number of tensor padding bits and pads the tensor based on a received tensor length, and then transmits it to the decoder to restore the image.

Embodiment 2:

As in embodiment 1, the autoencoder is used for image compression. Both an input of the encoder and an output of the decoder are images having a dimension of $L_X = L_{\hat{X}} = 128 \times 128 \times 3$. The output of the encoder (which is also the input of the decoder) has variable dimensions, and a maximum dimension is $L_Z = 128 \times 128 \times 3 \times (1 - \eta_{min})$.

$$\eta = 1 - \frac{L_Z}{L_X}$$

The smaller the encoding characteristic Z dimension, the higher the compression rate $\eta = 1 - \frac{L_Z}{L_X}$, and the blurrier the restored image. The larger the encoding characteristic Z dimension, the lower the compression rate $\eta$, and the clearer

the restored image. Possible compression ratio are $\eta_{min} =$ $\eta_1 = \frac{5}{6}$ , $\eta_2 = \frac{11}{12}$ , $\eta_3 = \frac{23}{24}$ , $\eta_4 = \frac{47}{48}$ . During training, a parameter $t \in \{8192,4096,2048,1024\}$ of the hard-masking module obeys equal probability distribution

$$\Pr\{t = 8192\} = \Pr\{t = 4096\} = \Pr\{t = 2048\} = \Pr\{t = 1024\} = \frac{1}{4}$$

, and acts on the output of the encoder.

Embodiment 3:

In an artificial intelligence-based channel estimation algorithm, a receiver estimates channel coefficients on all time-frequency resource blocks based on a received value of a demodulation reference signal (DMRS). The channel recovery algorithm is implemented based on a neural network. Under a situation of single slot (14 OFDM symbols) and 8 physical resource blocks (96 frequencies), a single-symbol DMRS configuration and a dual-symbol DMRS configuration are shown in FIG. 8. The single-symbol DMRS configuration corresponds to a neural network having an input dimension of 48 × 1 × 2 (where 48 corresponds to frequency, 1 corresponds to time, and 2 corresponds to the real and imaginary parts of the complex number). The dual-symbol DMRS configuration (an additional DMRS symbol is configured on the basis of configuring a single-symbol) corresponds to a neural network having an input dimension of 48 × 2 × 2, and an output dimension of the neural network is 96 × 14 × 2. A maximum input dimension of the neural network used for channel estimation is $L_X = 48 \times 2 \times 2$. During training, a 2-order index dimension (time dimension) of an input tensor is soft masked, and a parameter $\lambda \in [0,20]$ obeys uniform distribution. The deployed neural network with variable input dimensions is used for channel estimation in both single-symbol configuration and dual-symbol DMRS configuration.

Embodiment 4:

As in embodiment 3, a situation of single slot (14 OFDM symbols) and 8 physical resource blocks (96 frequencies), a single-symbol DMRS configuration corresponds to a neural network having an input dimension of 48 × 1 × 2, and the dual-symbol DMRS configuration corresponds to a neural network having an input dimension of 48 × 2 × 2. A maximum input dimension of the neural network used for channel estimation is $L_X = 48 \times 2 \times 2$. During training, a 2-order index dimension (time dimension) of an input tensor is hard masked, where a parameters is t = 1,2, and the

$$\Pr\{t = 1\} = \Pr\{t = 2\} = \frac{1}{2}$$

probability distribution is .

Embodiment 5:

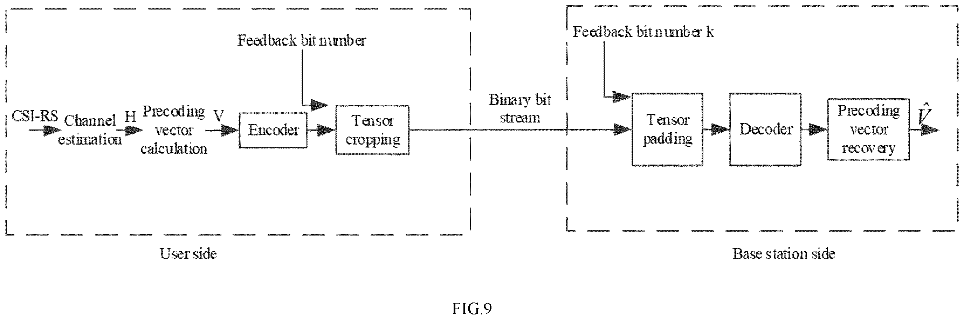

As shown in FIG. 9, an artificial intelligence-based channel state information (CSI) compression algorithm is implemented by using an autoencoder. The encoder is deployed on a UE side and the decoder is deployed on a base station side. The UE side estimates a channel H and calculates a precoding vector V based on the CSI reference signal (RS). The dimension of the precoding vector V is $n_{band} \times n_T \times 2 = 12 \times 32 \times 2 = 768$, where $n_{band} = 12$ represents 12 subbands, $n_T = 32$ represents 32 transmitting antennas, and 2 represents the real part and imaginary part. The encoder compresses the 768-dimensional V input value encoder into a vector. A tensor cropping module crops an output of the encoder and transmits it to the base station side based on a to-be-fed back bit k that need to be fed back. The base station side performs tensor padding on a received bit stream based on the number of feedback bits, and inputs it to the decoder to recover the precoding vector $\hat{V}$. During training, a tensor mask module is added between the encoder and decoder, random hard-masking is adopted, a parameter t ∈ [1,384] of the mask tensor obeys uniform distribution, and a loss function is cosine similarity.

In the method for operating the neural network provided by the embodiments of the present application, only one neural network is required to be trained and deployed to adapt to requirements for different input and output dimension, which has low training complexity and low storage overhead, and is conducive to deployment and continuous evolution of neural network online training.

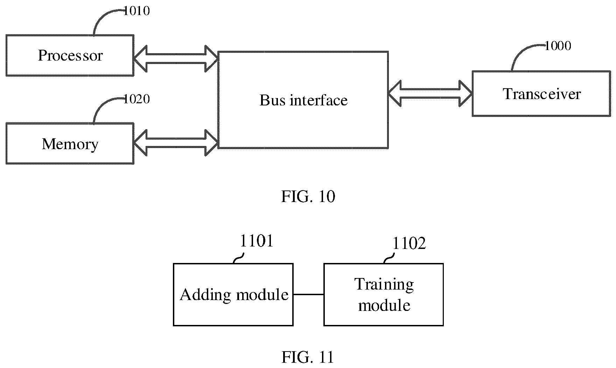

FIG. 10 is a schematic structural diagram of an electronic device according to an embodiment of the present application. As shown in FIG. 10, the electronic device includes a memory 1020, a transceiver 1000 and a processor 1010.

The memory 1020 is used to store computer programs, the transceiver 1000 is used to transmit and receive data under control of the processor 1010, and the processor 1010 is used to read the computer program in the memory 1020 and perform the following operations of:

adding a random mask layer to a first neural network based on a variable dimension type to obtain a second neural network, where the random mask layer is used for randomly masking a tensor input to the random mask layer; and training the second neural network by using sample data.

In an embodiment, the transceiver 1000 is used to receive and transmit data under the control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, these are well known in the art, and therefore will not be further described in the present application. The bus interface provides an interface. The transceiver 1000 may be multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field-programmable gate array (FPGA), or a complex programmable logic device (CPLD), the processor 1010 may also use a multi-core architecture.

In an embodiment, the variable dimension type includes one or more of the following types:

an input dimension being variable;
an output dimension being variable; or
an intermediate dimension being variable.

In an embodiment, adding the random mask layer to the first neural network based on the variable dimension type includes:
in case that the variable dimension type is the input dimension being variable, adding a random mask layer before an input layer of the first neural network.

In an embodiment, adding the random mask layer to the first neural network based on the variable dimension type includes:
in case that the variable dimension type is the output dimension being variable, adding a random mask layer after an output layer of the first neural network.

In an embodiment, adding the random mask layer to the first neural network based on the variable dimension type includes:
in case that the variable dimension type is the intermediate dimension being variable, adding a random mask layer in an intermediate layer of the first neural network.

In an embodiment, adding the random mask layer to the intermediate layer of the first neural network includes:
in case that only one intermediate dimension is variable, adding a random mask layer before or after an associated intermediate layer.

In an embodiment, adding the random mask layer to the intermediate layer of the first neural network includes:
in case that multiple intermediate dimensions are variable, adding a random mask layer before or after each of associated intermediate layers.

In an embodiment, training the second neural network by using the sample data includes:
in case that dimensions of input data of each sample data are a first threshold, training the second neural network by directly using all of the sample data, where the first threshold is a maximum value of dimensions of input data of all the sample data.

In an embodiment, training the second neural network by using the sample data includes:

in case that at least one first sample data exists, performing augmentation on the first sample data, and training the second neural network by using all the first sample data and all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, performing augmentation on the first sample data includes:

performing high-bit zero padding on input data of the first sample data.

In an embodiment, performing augmentation on the first sample data includes:

performing low-bit zero padding on input data of the first sample data.

In an embodiment, training the second neural network by using the sample data includes:

in case that at least one first sample data exists, eliminating the first sample data, and training the second neural network by using all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, randomly masking the tensor input to the random mask layer includes:

determining the tensor input to the random mask layer and a random mask tensor; and
randomly masking the tensor input to the random mask layer by using the random mask tensor.

In an embodiment, randomly masking the tensor input to the random mask layer is expressed by:

$$\hat{X} = X \otimes M,$$

where $\hat{X}$ represents a tensor output from the random mask layer, X represents the tensor input to the random mask layer, $\otimes$ represents performing bitwise point multiplication operation on tensors, and M represents the random mask tensor.

In an embodiment, the random mask tensor is a hard-masking tensor.

In an embodiment, the random mask tensor is a soft-masking tensor.

In an embodiment, the random mask tensor is merged by a hard-masking tensor and a soft-masking tensor.

In an embodiment, after training the second neural network by using the sample data, the processor 1010 further performs the following operations including:

replacing a random mask layer in the trained second neural network with a tensor transformation layer, where the tensor transformation layer is used to perform dimension transformation on a tensor input to the tensor transformation layer.

In an embodiment, replacing the random mask layer in the trained second neural network with the tensor transformation layer includes:

in case that a random mask layer exists before an input layer of the trained second neural network, replacing the random mask layer before the input layer of the trained second neural network with a tensor padding layer, where the tensor padding layer is used to increase a dimension of a tensor input to the tensor padding layer to a first threshold, and the first threshold is a maximum value of dimensions of input data of all the sample data.

In an embodiment, replacing the random mask layer in the trained second neural network with the tensor transformation layer includes:

in case that a random mask layer exists after an output layer of the trained second neural network, replacing the random mask layer after the output layer of the trained second neural network with a tensor cropping layer, where the cropping layer is used to reduce a dimension of a tensor input to the tensor cropping layer to a first target value.

In an embodiment, replacing the random mask layer in the trained second neural network with the tensor transformation layer includes:

in case that a random mask layer exists in an intermediate layer of the trained second neural network, replacing the random mask layer in the intermediate layer of the trained second neural network with a cascaded tensor cropping and tensor padding layer, where the cascaded tensor cropping and tensor padding layer is used to first reduce a dimension of a tensor input to the cascaded tensor cropping and tensor padding layer to a second target value, and then increase the dimension of the tensor to an original dimension.

The above-mentioned electronic device according to the embodiments of the present application may implement all the method steps implemented by the above method embodiment which is executed by an electronic device, and may achieve the same effect. The same parts and beneficial effects as the same method embodiments are not repeated in the present application.

An embodiment of the present application further provides a method for operating a neural network, including:

obtaining prediction data; and

inputting the prediction data to a deployed target neural network to obtain a prediction result output from the target neural network, where the target neural network includes at least one tensor transformation layer, and the tensor transformation layer is used to perform dimension transformation on a tensor input to the tensor transformation layer.

In an embodiment, the target neural network is the second neural network of any one of the above-mentioned second neural networks.

In the method for operating the neural network provided by the embodiments of the present application, only one neural network is required to be trained and deployed to adapt to requirements for different input and output dimensions, which has low training complexity and low storage overhead, and is conducive to deployment and continuous evolution of neural network online training.

An embodiment of the present application further provides an electronic device, including a memory, a transceiver and a processor.

The memory is used to store computer programs, the transceiver is used to transmit and receive data under control of the processor, and the processor is used to read the computer program in the memory and perform the following operations of:

obtaining prediction data; and

inputting the prediction data to a deployed target neural network to obtain a prediction result output from the target neural network, where the target neural network includes at least one tensor transformation layer, and the tensor transformation layer is used to perform dimension transformation on a tensor input to the tensor transformation layer.

In an embodiment, the transceiver is used for transmitting and receiving data under control of the processor.

A bus architecture may include any number of interconnected buses and bridges, which are linked together through various circuits of one or more processors represented by the processor and one or more memories represented by the memory. The bus architecture may also link together various other circuits, such as peripherals, voltage regulators, and power management circuits, these are well known in the art, and therefore will not be further described in the present application. The bus interface provides an interface. The transceiver may be multiple elements, i.e., including a transmitter and a receiver, units for providing communication with various other devices over transmission media including wireless channels, wired channels, fiber optic cables, and the like. The processor is responsible for managing the bus architecture and general processing, and the memory may store data used by the processor when performing operations.

The processor may be a central processing unit (CPU), an application specific integrated circuit (ASIC), a field-programmable gate array (FPGA), or a complex programmable logic device (CPLD), the processor may also use a multi-core architecture.

In an embodiment, the target neural network is the second neural network of any one of the above-mentioned second neural networks.

In the electronic device provided by the embodiments of the present application, only one neural network is required to be trained and deployed to adapt to requirements for different input and output dimensions, which has low training complexity and low storage overhead, and is conducive to deployment and continuous evolution of neural network online training.

FIG. 11 is a schematic structural diagram of an apparatus for operating a neural network according to an embodiment of the present application. As shown in FIG. 11, an embodiment of the present application provides an apparatus for operating a neural network, including an adding module 1101 and a training module 1102.

The adding module 1101 is used for adding a random mask layer to a first neural network based on a variable dimension type to obtain a second neural network, where the random mask layer is used for randomly masking a tensor input to the random mask layer.

The training module 1102 is used for training the second neural network by using sample data.

In an embodiment, the variable dimension type includes one or more of the following types:

an input dimension being variable;
an output dimension being variable; or
an intermediate dimension being variable.

In an embodiment, the adding module 1101 is specifically used for:

in case that the variable dimension type is the input dimension being variable, adding a random mask layer before an input layer of the first neural network.

In an embodiment, the adding module 1101 is specifically used for:

in case that the variable dimension type is the output dimension being variable, adding a random mask layer after an output layer of the first neural network.

In an embodiment, the adding module 1101 is used for:
in case that the variable dimension type is the intermediate dimension being variable, adding a random mask layer in an intermediate layer of the first neural network.

In an embodiment, the adding module 1101 is used for:
in case that only one intermediate dimension is variable, adding a random mask layer before or after an associated intermediate layer.

In an embodiment, the adding module 1101 is used for:
in case that multiple intermediate dimensions are variable, adding a random mask layer before or after each of associated intermediate layers.

In an embodiment, the training module 1102 is used for:
in case that dimensions of input data of each sample data are a first threshold, training the second neural network by directly using all of the sample data, where the first threshold is a maximum value of dimensions of input data of all the sample data.

In an embodiment, the training module 1102 is used for:
in case that at least one first sample data exists, performing augmentation on the first sample data, and training the second neural network by using all the first sample data and all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, the training module 1102 is used for:
performing high-bit zero padding on input data of the first sample data.

In an embodiment, the training module 1102 is used for:
performing low-bit zero padding on input data of the first sample data.

In an embodiment, the training module 1102 is used for:
in case that at least one first sample data exists, eliminating the first sample data, and training the second neural network by using all second sample data, where the first sample data is sample data whose dimensions of input data are not a first threshold, the second sample data is sample data whose dimensions of input data are the first threshold, and the first threshold is a maximum value of dimensions of input data of all sample data.

In an embodiment, the training module 1102 is used for:

determining the tensor input to the random mask layer and a random mask tensor; and
randomly masking the tensor input to the random mask layer by using the random mask tensor.

In an embodiment, randomly masking the tensor input to the random mask layer is expressed by:

$$\widehat{X} = X \otimes M,$$

where $\widehat{X}$ represents a tensor output from the random mask layer, X represents the tensor input to the random mask layer, $\otimes$ represents performing bitwise point multiplication operation on tensors, and M represents the random mask tensor.

In an embodiment, the random mask tensor is a hard-masking tensor.

In an embodiment, the random mask tensor is a soft-masking tensor.

In an embodiment, the random mask tensor is merged by a hard-masking tensor and a soft-masking tensor.

In an embodiment, the apparatus further includes a deploying module,
where the deploying module is used for replacing a random mask layer in the trained second neural network with a tensor transformation layer, where the tensor transformation layer is used to perform dimension transformation on a tensor input to the tensor transformation layer.

In an embodiment, the deploying module is used for:
in case that a random mask layer exists before an input layer of the trained second neural network, replacing the random mask layer before the input layer of the trained second neural network with a tensor padding layer, where the tensor padding layer is used to increase a dimension of a tensor input to the tensor padding layer to a first threshold, and the first threshold is a maximum value of dimensions of input data of all the sample data.

In an embodiment, the deploying module is used for:
in case that a random mask layer exists after an output layer of the trained second neural network, replacing the random mask layer after the output layer of the trained second neural network with a tensor cropping layer, where the cropping layer is used to reduce a dimension of a tensor input to the tensor cropping layer to a first target value.

In an embodiment, the deploying module is used for:
in case that a random mask layer exists in an intermediate layer of the trained second neural network, replacing the random mask layer in the intermediate layer of the trained second neural network with a cascaded tensor cropping and tensor padding layer, where the cascaded tensor cropping and tensor padding layer is used to first reduce a dimension of a tensor input to the cascaded tensor cropping and tensor padding layer to a second target value, and then increase the dimension of the tensor to an original dimension.

The above-mentioned apparatus for operating the neural network according to the embodiments of the present application may implement all the method steps implemented by the above method embodiment which is executed by an electronic device, and may achieve the same effect. The same parts and beneficial effects as the same method embodiments are not repeated in the present application.

An embodiment of the present application further provides an apparatus for operating a neural network, including:

an obtaining module, used for obtaining prediction data; and
a processing module, used for inputting the prediction data to a deployed target neural network to obtain a prediction result output from the target neural network, where the target neural network includes at least one tensor transformation layer, and the tensor transformation layer is used to perform dimension transformation on a tensor input to the tensor transformation layer.

In an embodiment, the target neural network is the second neural network of any one of the above-mentioned second neural networks.

In the apparatus for operating the neural network provided by the embodiments of the present application, only one neural network is required to be trained and deployed to adapt to requirements for different input and output dimensions, which has low training complexity and low storage overhead, and is conducive to deployment and continuous evolution of neural network online training.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the technical solutions that contributes to the related art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

In an embodiment, a computer-readable storage medium is further provided. The computer-readable storage medium stores a computer program. The computer program is used to cause a computer to perform steps of the method for operating the neural network provided by the above method embodiments.

The above-mentioned computer-readable storage medium according to the embodiments of the present application may implement all the method steps implemented by the above-mentioned method embodiments, and may achieve the same effect. The same parts and beneficial effects as the same method embodiments are not repeated in the present application.

It should be noted that the computer-readable storage medium can be any available medium or data storage device that the processor can access, including but not limited to magnetic memory (such as floppy disk, hard disk, tape, magneto-optical disk (MO), etc.), optical memory (such as CD, DVD, BD, HVD, etc.), and semiconductor memory (such as ROM, EPROM, EEPROM, non-volatile memory (NAND FLASH), solid state drive (SSD)), etc.

In addition, it should be noted that in the embodiments of this application, the terms "first", "second", etc. are used to distinguish similar objects and are not used to describe a specific order or sequence. It is to be understood that the terms so used are interchangeable under appropriate circumstances so that the embodiments of the present application can be practiced in sequences other than those illustrated or described herein, and that "first" and "second" are distinguished objects It is usually one type, and the number of objects is not limited. For example, the first object can be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "j" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include user equipment and a network device. The system may also include a core network part, such as an evolved packet system (EPS), a 5G system (5GS), and the like.

The terminal device in the embodiments of the present application may be a device that provides voice and/or data connectivity to a user, a handheld device with a radio connection function, or other processing device connected to a radio modem. In different systems, the names of the terminal may be different. For example, in the 5G system, the terminal device may be called as user equipment (UE). A radio terminal may communicate with one or more core networks (CN) via a radio access network (RAN), and the radio terminal may be a mobile terminal, such as a mobile phone (or cellular phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device in the embodiments of the present application may be a base station, and the base station may include multiple cells providing services for the terminal. Depending on the specific application, the network device may also be called an access point, or may be a device in the access network that communicates with radio terminal through one or more sectors on the air interface, or other names. Network device may be used to exchange received air frames with internet protocol (IP) packets, and act as a router between radio terminal and the rest of the access network, and the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made to the present application without departing from the scope of the present application. Thus, provided that these modifications and variations of the present application fall within the scope of the claims of the present application and their equivalents, the present application is also intended to cover such modifications and variations.

**Claims**

1. A method for operating a neural network, comprising:

   setting a random mask layer in a first neural network based on a variable dimension type to obtain a second neural network, wherein the random mask layer is used for randomly masking a tensor input to the random mask layer; and
   training the second neural network by using sample data.

2. The method of claim 1, wherein the variable dimension type comprises one or more of the following types:

   an input dimension being variable;
   an output dimension being variable; or
   an intermediate dimension being variable.

3. The method of claim 2, wherein setting the random mask layer in the first neural network based on the variable dimension type comprises:
   in case that the variable dimension type is the input dimension being variable, setting a random mask layer before an input layer of the first neural network.

4. The method of claim 2, wherein setting the random mask layer in the first neural network based on the variable dimension type comprises:
   in case that the variable dimension type is the output dimension being variable, setting a random mask layer after an output layer of the first neural network.

5. The method of claim 2, wherein setting the random mask layer in the first neural network based on the variable dimension type comprises:
   in case that the variable dimension type is the intermediate dimension being variable, setting a random mask layer in an intermediate layer of the first neural network.

6. The method of claim 5, wherein setting the random mask layer in the intermediate layer of the first neural network comprises:
   in case that only one intermediate dimension is variable, setting a random mask layer before or after an associated intermediate layer.

7. The method of claim 5, wherein setting the random mask layer in the intermediate layer of the first neural network comprises:
   in case that multiple intermediate dimensions are variable, setting a random mask layer before or after each of associated intermediate layers.

8. The method of claim 1, wherein training the second neural network by using the sample data comprises:
   in case that dimensions of input data of each sample data are a first threshold, training the second neural network by directly using all of the sample data, wherein the first threshold is a maximum value of dimensions of input data of all the sample data.

9. The method of claim 1, wherein training the second neural network by using the sample data comprises:
in case that at least one first sample data exists, performing augmentation on the first sample data, and training the second neural network by using all the first sample data and all second sample data, wherein the first sample data is sample data whose dimensions of input data are not a first threshold, the second sample data is sample data whose dimensions of input data are the first threshold, and the first threshold is a maximum value of dimensions of input data of all sample data.

10. The method of claim 9, wherein performing augmentation on the first sample data comprises:
performing high-bit zero padding on input data of the first sample data.

11. The method of claim 9, wherein performing augmentation on the first sample data comprises:
performing low-bit zero padding on input data of the first sample data.

12. The method of claim 1, wherein training the second neural network by using the sample data comprises:
in case that at least one first sample data exists, eliminating the first sample data, and training the second neural network by using all second sample data, wherein the first sample data is sample data whose dimensions of input data are not a first threshold, the second sample data is sample data whose dimensions of input data are the first threshold, and the first threshold is a maximum value of dimensions of input data of all sample data.

13. The method of claim 1, wherein randomly masking the tensor input to the random mask layer comprises:

determining the tensor input to the random mask layer and a random mask tensor; and
randomly masking the tensor input to the random mask layer by using the random mask tensor.

14. The method of claim 13, wherein randomly masking the tensor input to the random mask layer is expressed by:

$$\hat{X} = X \otimes M,$$

wherein $\hat{X}$ represents a tensor output from the random mask layer, X represents the tensor input to the random mask layer, $\otimes$ represents performing bitwise point multiplication operation on tensors, and M represents the random mask tensor.

15. The method of claim 13, wherein the random mask tensor is a hard-masking tensor.

16. The method of claim 13, wherein the random mask tensor is a soft-masking tensor.

17. The method of claim 13, wherein the random mask tensor is merged by a hard-masking tensor and a soft-masking tensor.

18. The method of claim 1, wherein after training the second neural network by using the sample data, the method further comprises:
updating a random mask layer in a trained second neural network with a tensor transformation layer, wherein the tensor transformation layer is used to perform dimension transformation on a tensor input to the tensor transformation layer.

19. The method of claim 18, wherein updating the random mask layer in the trained second neural network with a tensor transformation layer comprises:
in case that a random mask layer exists before an input layer of the trained second neural network, updating the random mask layer before the input layer of the trained second neural network with a tensor padding layer, wherein the tensor padding layer is used to increase a dimension of a tensor input to the tensor padding layer to a first threshold, and the first threshold is a maximum value of dimensions of input data of all the sample data.

20. The method of claim 18, wherein updating the random mask layer in the trained second neural network with a tensor transformation layer comprises:
in case that a random mask layer exists after an output layer of the trained second neural network, updating the random mask layer after the output layer of the trained second neural network with a tensor cropping layer, wherein the cropping layer is used to reduce a dimension of a tensor input to the tensor cropping layer to a first target value.

21. The method of claim 18, wherein updating the random mask layer in the trained second neural network with a tensor transformation layer comprises:
in case that a random mask layer exists in an intermediate layer of the trained second neural network, updating the random mask layer in the intermediate layer of the trained second neural network with a cascaded tensor cropping and tensor padding layer, wherein the cascaded tensor cropping and tensor padding layer is used to first reduce a dimension of a tensor input to the cascaded tensor cropping and tensor padding layer to a second target value, and then increase the dimension of the tensor to an original dimension.

22. An electronic device, comprising a memory, a transceiver and a processor,
wherein the memory is used to store computer programs, the transceiver is used to transmit and receive data under control of the processor, and the processor is used to read the computer program in the memory and perform the following operations of:

setting a random mask layer to a first neural network based on a variable dimension type to obtain a second neural network, wherein the random mask layer is used for randomly masking a tensor input to the random mask layer; and
training the second neural network by using sample data.

23. The electronic device of claim 22, wherein the variable dimension type comprises one or more of the following types:

an input dimension being variable;
an output dimension being variable; or
an intermediate dimension being variable.

24. The electronic device of claim 23, wherein setting the random mask layer in the first neural network based on the variable dimension type comprises:
in case that the variable dimension type is the input dimension being variable, setting a random mask layer before an input layer of the first neural network.

25. The electronic device of claim 23, wherein setting the random mask layer in the first neural network based on the variable dimension type comprises:
in case that the variable dimension type is the output dimension being variable, setting a random mask layer after an output layer of the first neural network.

26. The electronic device of claim 23, wherein setting the random mask layer in the first neural network based on the variable dimension type comprises:
in case that the variable dimension type is the intermediate dimension being variable, setting a random mask layer in an intermediate layer of the first neural network.

27. The electronic device of claim 26, wherein setting the random mask layer in the intermediate layer of the first neural network comprises:
in case that only one intermediate dimension is variable, setting a random mask layer before or after an associated intermediate layer.

28. The electronic device of claim 26, wherein setting the random mask layer in the intermediate layer of the first neural network comprises:
in case that multiple intermediate dimensions are variable, setting a random mask layer before or after each of associated intermediate layers.

29. The electronic device of claim 22, wherein training the second neural network by using the sample data comprises:
in case that dimensions of input data of each sample data are a first threshold, training the second neural network by directly using all of the sample data, wherein the first threshold is a maximum value of dimensions of input data of all the sample data.

30. The electronic device of claim 22, wherein training the second neural network by using the sample data comprises:
in case that at least one first sample data exists, performing augmentation on the first sample data, and training the second neural network by using all the first sample data and all second sample data, wherein the first sample data is sample data whose dimensions of input data are not a first threshold, the second sample data is sample data whose dimensions of input data are the first threshold, and the first threshold is a maximum value of dimensions of input data of all sample data.

31. The electronic device of claim 30, wherein performing augmentation on the first sample data comprises:
performing high-bit zero padding on input data of the first sample data.

32. The electronic device of claim 30, wherein the augmentation processing of the first sample data comprises:
performing low-bit zero padding on input data of the first sample data.

33. The electronic device of claim 22, wherein training the second neural network by using the sample data comprises:
in case that at least one first sample data exists, eliminating the first sample data, and training the second neural network by using all second sample data, wherein the first sample data is sample data whose dimensions of input data are not a first threshold, the second sample data is sample data whose dimensions of input data are the first threshold, and the first threshold is a maximum value of dimensions of input data of all sample data.

34. The electronic device of claim 22, wherein randomly masking the tensor input to the random mask layer comprises:

determining the tensor input to the random mask layer and a random mask tensor; and
randomly masking the tensor input to the random mask layer by using the random mask tensor.

35. The electronic device of claim 34, wherein randomly masking the tensor input to the random mask layer is expressed by:

$$\hat{X} = X \otimes M,$$

wherein $\hat{X}$ represents a tensor output from the random mask layer, X represents the tensor input to the random mask layer, $\otimes$ represents performing bitwise point multiplication operation on tensors, and M represents the random mask tensor.

36. The electronic device of claim 34, wherein the random mask tensor is a hard-masking tensor.

37. The electronic device of claim 34, wherein the random mask tensor is a soft-masking tensor.

38. The electronic device of claim 34, wherein the random mask tensor is merged by a hard-masking tensor and a soft-masking tensor.

39. The electronic device of claim 22, wherein after training the second neural network by using the sample data, the processor further performs the following operations of:
updating a random mask layer in a trained second neural network with a tensor transformation layer, wherein the tensor transformation layer is used to perform dimension transformation on a tensor input to the tensor transformation layer.

40. The electronic device of claim 39, wherein updating the random mask layer in the trained second neural network with a tensor transformation layer comprises:
in case that a random mask layer exists before an input layer of the trained second neural network, updating the random mask layer before the input layer of the trained second neural network with a tensor padding layer, wherein the tensor padding layer is used to increase a dimension of a tensor input to the tensor padding layer to a first threshold, and the first threshold is a maximum value of dimensions of input data of all the sample data.

41. The electronic device of claim 39, wherein updating the random mask layer in the trained second neural network with a tensor transformation layer comprises:
in case that a random mask layer exists after an output layer of the trained second neural network, updating the random mask layer after the output layer of the trained second neural network with a tensor cropping layer, wherein the cropping layer is used to reduce a dimension of a tensor input to the tensor cropping layer to a first target value.

42. The electronic device of claim 39, wherein updating the random mask layer in the trained second neural network with a tensor transformation layer comprises:

in case that a random mask layer exists in an intermediate layer of the trained second neural network, updating the random mask layer in the intermediate layer of the trained second neural network with a cascaded tensor cropping and tensor padding layer, wherein the cascaded tensor cropping and tensor padding layer is used to first reduce a dimension of a tensor input to the cascaded tensor cropping and tensor padding layer to a second target value, and then increase the dimension of the tensor to an original dimension.

43. A method for operating a neural network, comprising:

obtaining prediction data; and
inputting the prediction data to a deployed target neural network to obtain a prediction result output from the target neural network, wherein the target neural network comprises at least one tensor transformation layer, and the tensor transformation layer is used to perform dimension transformation on a tensor input to the tensor transformation layer.

44. The method of claim 43, wherein the target neural network is the second neural network of any one of claims 1 to 21.

45. An electronic device, comprising a memory, a transceiver and a processor,
wherein the memory is used to store computer programs, the transceiver is used to transmit and receive data under control of the processor, and the processor is used to read the computer program in the memory and perform the following operations of:

obtaining prediction data; and
inputting the prediction data to a deployed target neural network to obtain a prediction result output from the target neural network, wherein the target neural network comprises at least one tensor transformation layer, and the tensor transformation layer is used to perform dimension transformation on a tensor input to the tensor transformation layer.

46. The electronic device of claim 45, wherein the target neural network is the second neural network of any one of claims 1 to 21.

47. An apparatus for operating a neural network, comprising:

an adding module, used for setting a random mask layer in a first neural network based on a variable dimension type to obtain a second neural network, wherein the random mask layer is used for randomly masking a tensor input to the random mask layer; and
a training module, used for training the second neural network by using sample data.

48. The apparatus of claim 47, wherein the variable dimension type comprises one or more of the following types:

an input dimension being variable;
an output dimension being variable; or
an intermediate dimension being variable.

49. The apparatus of claim 48, wherein the adding module is used for:
in case that the variable dimension type is the input dimension being variable, adding a random mask layer before an input layer of the first neural network.

50. The apparatus of claim 48, wherein the adding module is used for:
in case that the variable dimension type is the output dimension being variable, adding a random mask layer after an output layer of the first neural network.

51. The apparatus of claim 48, wherein the adding module is used for:
in case that the variable dimension type is the intermediate dimension being variable, adding a random mask layer in an intermediate layer of the first neural network.

52. The apparatus of claim 51, wherein the adding module is used for:
in case that only one intermediate dimension is variable, adding a random mask layer before or after an associated intermediate layer.

**53.** The apparatus of claim 51, wherein the adding module is used for:
in case that multiple intermediate dimensions are variable, adding a random mask layer before or after each of associated intermediate layers.

**54.** The apparatus of claim 47, wherein the training module is used for:
in case that dimensions of input data of each sample data are a first threshold, training the second neural network by directly using all of the sample data, wherein the first threshold is a maximum value of dimensions of input data of all the sample data.

**55.** The apparatus of claim 47, wherein the training module is used for:
in case that at least one first sample data exists, performing augmentation on the first sample data, and training the second neural network by using all the first sample data and all second sample data, wherein the first sample data is sample data whose dimensions of input data are not a first threshold, the second sample data is sample data whose dimensions of input data are the first threshold, and the first threshold is a maximum value of dimensions of input data of all sample data.

**56.** The apparatus of claim 55, wherein the training module is used for:
performing high-bit zero padding on input data of the first sample data.

**57.** The apparatus of claim 55, wherein the training module is used for:
performing low-bit zero padding on input data of the first sample data.

**58.** The apparatus of claim 47, wherein the training module is used for:
in case that at least one first sample data exists, eliminating the first sample data, and training the second neural network by using all second sample data, wherein the first sample data is sample data whose dimensions of input data are not a first threshold, the second sample data is sample data whose dimensions of input data are the first threshold, and the first threshold is a maximum value of dimensions of input data of all sample data.

**59.** The apparatus of claim 47, wherein the training module is used for:

determining the tensor input to the random mask layer and a random mask tensor; and
randomly masking the tensor input to the random mask layer by using the random mask tensor.

**60.** The apparatus of claim 59, wherein randomly masking the tensor input to the random mask layer is expressed by:

$$\widehat{X} = X \otimes M,$$

wherein X represents a tensor output from the random mask layer, X represents the tensor input to the random mask layer, $\otimes$ represents performing bitwise point multiplication operation on tensors, and M represents the random mask tensor.

**61.** The apparatus of claim 59, wherein the random mask tensor is a hard-masking tensor.

**62.** The apparatus of claim 59, wherein the random mask tensor is a soft-masking tensor.

**63.** The apparatus of claim 59, wherein the random mask tensor is merged by a hard-masking tensor and a soft-masking tensor.

**64.** The apparatus of claim 47, further comprising a deploying module,
wherein the deploying module is used for replacing a random mask layer in the trained second neural network with a tensor transformation layer, wherein the tensor transformation layer is used to perform dimension transformation on a tensor input to the tensor transformation layer.

**65.** The apparatus of claim 64, wherein the deploying module is used for:
in case that a random mask layer exists before an input layer of the trained second neural network, replacing the random mask layer before the input layer of the trained second neural network with a tensor padding layer, wherein the tensor padding layer is used to increase a dimension of a tensor input to the tensor padding layer to a first threshold, and the first threshold is a maximum value of dimensions of input data of all the sample data.

66. The apparatus of claim 64, wherein the deploying module is used for:
in case that a random mask layer exists after an output layer of the trained second neural network, replacing the random mask layer after the output layer of the trained second neural network with a tensor cropping layer, wherein the cropping layer is used to reduce a dimension of a tensor input to the tensor cropping layer to a first target value.

67. The apparatus of claim 64, wherein the deploying module is used for:
in case that a random mask layer exists in an intermediate layer of the trained second neural network, replacing the random mask layer in the intermediate layer of the trained second neural network with a cascaded tensor cropping and tensor padding layer, wherein the cascaded tensor cropping and tensor padding layer is used to first reduce a dimension of a tensor input to the cascaded tensor cropping and tensor padding layer to a second target value, and then increase the dimension of the tensor to an original dimension.

68. An apparatus for operating a neural network, comprising:

an obtaining module, used for obtaining prediction data; and
a processing module, used for inputting the prediction data to a deployed target neural network to obtain a prediction result output from the target neural network, wherein the target neural network comprises at least one tensor transformation layer, and the tensor transformation layer is used to perform dimension transformation on a tensor input to the tensor transformation layer.

69. The apparatus of claim 68, wherein the target neural network is the second neural network of one of claims 47 to 67.

70. A computer-readable storage medium storing a computer program, wherein the computer program is used to cause a computer to perform the steps of any one of claims 1 to 21, or perform the steps of any one of claims 43 to 44.

FIG. 1

| Adding a random mask layer to a first neural network based on a variable dimension type to obtain a second neural network, where the random mask layer is used for randomly masking a tensor input to the random mask layer | 201 |

| Training the second neural network by using sample data | 202 |

FIG. 2

Training data → Random masking → [Neural network: Input layer → Intermediate layer 1 → ... → Intermediate layer i → $X$ → Random masking → $\hat{X}$ → Intermediate layer i+1 → ... → Output layer] → Random masking → Loss calculation → Gradient calculation → Parameter updating

FIG. 3

FIG. 4

FIG. 5

FIG. 6

FIG. 7

FIG. 8

FIG.9

1010

Processor

1020

Memory

Bus interface

1000

Transceiver

FIG. 10

1101

Adding module

1102

Training module

FIG. 11

## INTERNATIONAL SEARCH REPORT

| International application No. |
|---|
| **PCT/CN2022/126458** |

**A. CLASSIFICATION OF SUBJECT MATTER**

H04L 25/02(2006.01)i; G06N 3/02(2006.01)i

According to International Patent Classification (IPC) or to both national classification and IPC

**B. FIELDS SEARCHED**

Minimum documentation searched (classification system followed by classification symbols)

H04L; H04W; G06N

Documentation searched other than minimum documentation to the extent that such documents are included in the fields searched

Electronic data base consulted during the international search (name of data base and, where practicable, search terms used)

CNTXT; CNKI; WPABS; ENTXT; ENTXTC; IEEE; 3GPP: 神经网络, 随机, 掩膜, 掩模, 掩蔽, 张量, 维度, 可变, 变换, 改变, neural network, random, mask+, tensor, dimension, chang+, alter+

**C. DOCUMENTS CONSIDERED TO BE RELEVANT**

| Category* | Citation of document, with indication, where appropriate, of the relevant passages | Relevant to claim No. |
|---|---|---|
| X | CN 109948794 A (TSINGHUA UNIVERSITY) 28 June 2019 (2019-06-28) description, paragraphs 50-132 | 43, 45, 68, 70 |
| A | CN 111724327 A (CHENGDU SHUZHILIAN TECHNOLOGY CO., LTD.) 29 September 2020 (2020-09-29) description, paragraphs 59-96 | 1-70 |
| A | US 2021110813 A1 (PINDROP SECURITY, INC.) 15 April 2021 (2021-04-15) entire document | 1-70 |
| A | US 2021287092 A1 (MONTAGE TECHNOLOGY CO., LTD.) 16 September 2021 (2021-09-16) entire document | 1-70 |
| A | US 2021383234 A1 (ROBERT BOSCH GMBH) 09 December 2021 (2021-12-09) entire document | 1-70 |

☐ Further documents are listed in the continuation of Box C.    ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 November 2022** | **23 December 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/126458**

| Patent document cited in search report | | | Publication date (day/month/year) | Patent family member(s) | | | Publication date (day/month/year) |
|---|---|---|---|---|---|---|---|
| CN | 109948794 | A | 28 June 2019 | None | | | |
| CN | 111724327 | A | 29 September 2020 | None | | | |
| US | 2021110813 | A1 | 15 April 2021 | WO | 2021072109 | A1 | 15 April 2021 |
| | | | | AU | 2020363882 | A1 | 31 March 2022 |
| | | | | EP | 4042415 | A1 | 17 August 2022 |
| | | | | CA | 3154309 | A1 | 15 April 2021 |
| US | 2021287092 | A1 | 16 September 2021 | None | | | |
| US | 2021383234 | A1 | 09 December 2021 | CN | 113837375 | A | 24 December 2021 |
| | | | | DE | 102021205722 | A1 | 09 December 2021 |
| | | | | KR | 20210152404 | A | 15 December 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111593613

- CN 202210039452